Europäisches Patentamt

(19) European Patent Office

Office européen des brevets

(11) Publication number : **0 357 344 B1**

(12) **EUROPEAN PATENT SPECIFICATION**

(45) Date of publication of patent specification :
26.10.94 Bulletin 94/43

(51) Int. Cl.⁵ : **G06F 15/38**

(21) Application number : 89308613.2

(22) Date of filing : 24.08.89

(54) **Computer assisted language translating machine.**

(30) Priority : 29.08.88 JP 214257/88

(43) Date of publication of application :
07.03.90 Bulletin 90/10

(45) Publication of the grant of the patent :
26.10.94 Bulletin 94/43

(84) Designated Contracting States :
DE GB

(56) References cited :
EP-A- 0 176 858
EP-A- 0 235 739
PATENT ABSTRACTS OF JAPAN vol. 7, no.
206 (P-222) 10 September 1983, & JP-A-58
101326 (RICOH K.K.) 16 June 1983,
PATENT ABSTRACTS OF JAPAN vol. 12, no.
62 (P-670) 25 February 1988, & JP-A-62 203273
(TOSHIBA CORP.) 07 September 1987,

(73) Proprietor : SHARP KABUSHIKI KAISHA
22-22 Nagaike-cho
Abeno-ku
Osaka 545 (JP)

(72) Inventor : Kugimiya, Shuzo
44-401,1, Ukyo 2-chome
Nara-shi Nara-ken (JP)
Inventor : Fukumochi, Yoji
2-7-12, Higashishigigaoka
Sango-cho
Ikoma-gun Nara-ken (JP)
Inventor : Nakamura, Ichiko
Takanohara-Urban C -408
2-2, Kabutodai
Kizu-cho
Soraku-gun
Kyoto-fu (JP)
Inventor : Hirai, Tokuyuki
492, Minosho-cho
Yamatokoriyama-shi
Nara-ken (JP)
Inventor : Suzuki, Hitoshi
25-25, Nishichiyogaoka 3-chome
Nara-shi Nara-ken (JP)

(74) Representative : Brown, Kenneth Richard et al
R.G.C. Jenkins & Co.
26 Caxton Street
London SW1H 0RJ (GB)

## Description

BACKGROUND OF THE INVENTION

1. Field of the Invention

The present invention relates to a computer assisted language translating machine capable of providing a translated output as quickly and accurately as possible.

2. Description of the Prior Art

Where a source language is to be translated into a target language with the use of the computer assisted language translating machine, information retrieval is carried out making reference not only to the fixed main dictionary, but also to a fixed technical dictionary which is filled with technical terms in one or more particular fields of science and a user customized dictionary which is filled by the user or operator with words peculiar to the user's business. During the operation of the translating machine, the information retrieval performed by the computer system is first made to the user customized dictionary, then to the fixed technical dictionary and finally to the fixed main dictionary, to find an appropriate word in the target language which corresponds to a word in the source language inputted by the user from the keyboard. In other words, the sequence of dictionary referencing performed by the computer system used in the translating machine begins with the user tailored dictionary followed by the technical dictionary and finally by the fixed main dictionary.

This dictionary referencing sequence appears to be appropriate in most cases. However, where an operator of the translating machine wishes to have the translating machine choose a particular one of an available number of target language words all equivalent to one particular source language word, the above discussed dictionary referencing sequence often becomes inconvenient. Considering a language translation from English into Japanese, an English word "book" may be translated into some Japanese words, for example, "HON" (expressed by a Chinese ideographic character or Kanji) and "BUKKU" (expressed by Japanese syllabary characters or Kana), both meaning a bound set of printed sheets of paper. In an ordinary sense, "HON" is a widely accepted word of Japanese origin and, therefore, is usually registered in the fixed main dictionary, whereas "BUKKU" is a limitedly accepted Japanese word transliterated from the English word "book" in terms of a phonetical representation and is, therefore, usually registered in the user customized dictionary.

If the prior art dictionary referencing sequence discussed above is employed under these circumstances, it may happen that a certain source language word may be translated into an equivalent target language word not called for by the operator of the translating machine. In the example of English-to-Japanese translation illustrated above, assuming that the operator of the translating machine wishes to have the English word "book" translated into an equivalent Japanese word "HON", the dictionary referencing according to the prior art sequence would result in a translation of the English word "book" into another equivalent Japanese word "BUKKU". Once this occurs, the translation of "book" into "BUKKU" may be often considered as an erroneous translation.

Thus, with the prior art computer assisted language translating machine, the translating machine would not necessarily provide an accurate language translation at all times and, once such an erroneous translation occurs, the operator has to exercise a revision, requiring a relatively prolonged time to complete the translation job.

EP-A-0 176 858, filed by the present applicant, describes a translation system in which information identifying the "part of speech" of a source language word (e.g. whether a noun, verb, etc.) is input, together with the source word, so as to produce a correct translation in the target language.

EP-A-0 235 739 describes a translation system in which a second of two dictionaries is automatically preferentially consulted for translation of an input source word which is identified by the system as a noun and is found in both dictionaries.

## SUMMARY OF THE INVENTION

The present invention has been developed with a view to substantially solving the above described disadvantages and has for its essential object to accomplish a quick and accurate translation from a source language word into one of equivalent target language words.

The invention provides a computer assisted language translating machine having dictionary means for storing a plurality of dictionaries associating words of a source language and words of a target language, means for inputting a sentence comprising words in the source language and additional information concerning at least one word of the source language and means for producing a corresponding sentence in the target language with reference to the dictionary means, characterised in that said additional information is a dictionary specifying code associated with a said source language word to refer for the translation of that source language word to the one of said dictionaries specified by said code, said dictionaries providing different translations of said source language word, said translations having equivalent meanings in the target language and being selectable according to predefined criteria.

According to a preferred embodiment of the present invention, there is provided a computer assisted language translating machine which comprises a morpheme analyzer for separating a source language sentence, entered in the translating machine, into morphemes with the use of dictionaries; a syntax analyzer for analyzing the syntax of a string of the morphemes, which have been separated by the morpheme analyzer, with the use of a dictionary and grammatical rules; a converter for converting a syntactic structure of the input sentence, analyzed by the syntax analyzer, into a syntactic structure of the target language; a sentence generator for generating a translated sentence according to the syntactic structure of the target language converted by the converter; a code input means for inputting a dictionary specifying code to at least one of the source language sentence words which requires the use of a particular one of the dictionaries, utilized by the morpheme analyzer for dictionary referencing, when being translated into a target language counterpart, said dictionary specifying code being used to specify such particular one of the dictionaries; a discriminating means for determining whether or not the dictionary specifying code has been affixed by the code input means to such one of the words; and a dictionary referencing means operable, when the discriminating means determines that the dictionary specifying code has been affixed to such one of the words, to make reference to such particular one of the dictionaries and also operable, when the discriminating means determines that the dictionary specifying code has not been affixed to such one of the words, to make reference to all of the dictionaries according to a predetermined system dictionary referencing sequence.

According to the present invention, when a source language sentence being inputted in the computer assisted language translating machine through a keyboard contains at least one word that requires the system to refer to a special dictionary, the dictionary specifying code specifying such special dictionary is inputted by the code input means so that the dictionary specifying code can be affixed to such word.

When a source language sentence comprising a strings of words containing the source language word affixed with the dictionary specifying code in the manner as hereinabove described is inputted in the morpheme analyzer, the source language sentence is separated into a string of morphemes with which the discriminating means operates to determine if the dictionary specifying code has been affixed to the particular word. Should the discriminating means determine that the particular word has been affixed with the dictionary specifying code, the dictionary referencing means makes use of one of the dictionaries that is specified by the dictionary specifying code. On the other hand, should the discriminating means determine that no dictionary specifying code have been affixed to any one of the words comprising the input sentence, the dictionary referencing means make use of all of the dictionaries according to the predetermined dictionary referencing sequence. In this way, where the dictionary specifying code has been affixed to a particular word, one of the dictionaries associated with the dictionary specifying code is given priority during the dictionary referencing performed by the system to provide a target language counterpart that meets the user's desire.

The syntactic structure of the strings of the morphemes is subsequently analyzed by the syntax analyzer according to both the information representative of the target language counterpart of the particular word affixed with the dictionary specifying code and the grammatical rules. The syntactic structure generated by the syntax analyzer is then converted by the converter into a syntactic structure of the target language.

The syntactic structure of the target language is utilized by the sentence generator for generating a translated sentence according to such syntactic structure of the target language.

BRIEF DESCRIPTION OF THE DRAWINGS

By way of example only, a preferred embodiment of the invention will be described with reference to the accompanying drawings in which like parts are designated by like reference numerals and in which:
Fig. 1 is a block diagram of a preferred embodiment of a computer assisted language translating machine according to the present invention;
Fig. 2 is an explanatory diagram of the translation levels in automatic translation;
Fig. 3 is an operating structure diagram of the translation module according to the preferred embodiment;
Fig. 4 is a block diagram of the translation module;
Figs. 5 - 9 are diagrams showing the contents of each buffer shown in Fig. 4;
Fig. 10 is a dictionary referencing flow chart; and
Fig. 11 is a diagram showing a sample text in a source language inputted to the computer assisted language translating machine of Fig. 1 and the corresponding output sentence (translated sentence) in a target language.

## DETAILED DESCRIPTION OF THE PREFERRED EMBODIMENT

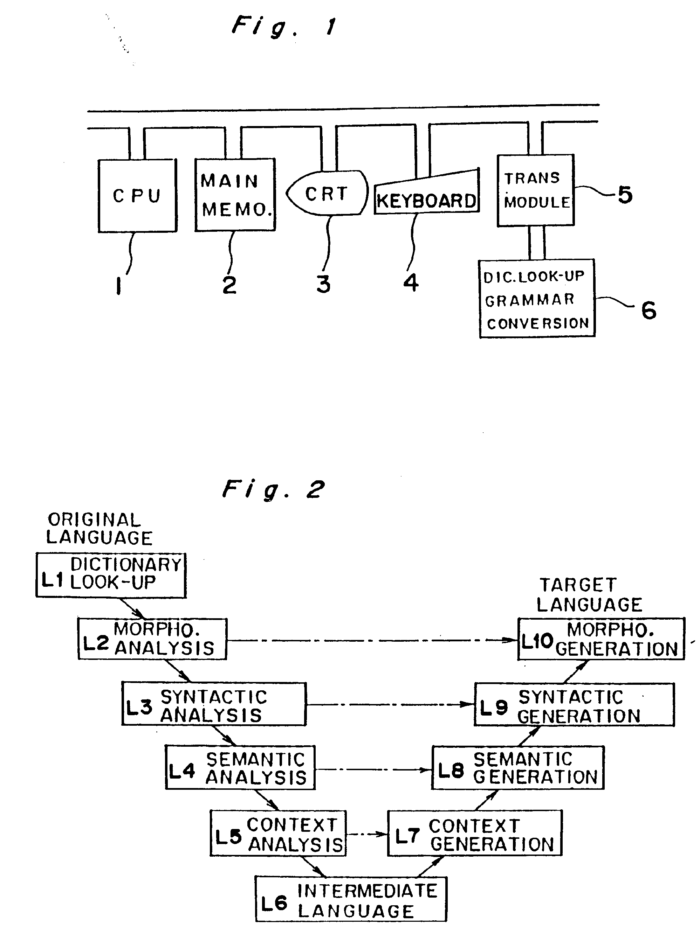

Referring to Fig. 1, a block diagram of a computer assisted language translating machine according to the present invention is shown. The translating machine comprises a main CPU (central processing unit) 1, a main memory 2, a CRT 3 (cathode ray tube) 3, a keyboard 4, a translation module 5, and a memory device 6 storing dictionaries, grammatical rules, and tree structure conversion rules for translation.

When a source language text is inputted to the translation module 5, the translation module 5 translates and outputs a target language counterpart. Specifically, the source language text entered from keyboard 4 is transferred to the translation module 5 under the control of the main CPU 1. The translation module 5 makes use of a plurality of storage dictionaries, grammatical rules and tree structure conversion rules stored in the memory 6 to translate the inputted source language text into the target language counterpart as will be described later. The result of this translation is temporarily stored in the main memory 2 and is displayed on the CRT 3.

Automatic translation such as performed by the translation module 5 generally consists of the analytical levels shown in Fig. 2. When the source language text is inputted as shown at the top left of Fig. 2, analysis progresses through level L1 dictionary referencing, level L2 morpheme analysis, level L3 grammatical construction, or syntactic, analysis, and so on.

Machine translation can be broadly divided into two major types according to these analytical levels. One is the pivot method in which source language sentences are analyzed through level L6 to obtain an intermediate language which is neither the source language nor the target language, but is specific to the translating machine. Analysis then proceeds through level L7 context generation, level L8 semantic generation, level L9 syntactic generation, and to level 10 morpheme generation, where the target language text corresponding to the source language text is generated.

The other is the transfer method in which the aforementioned level L2 morpheme analysis, level L3 grammatical construction analysis, level L4 semantic analysis, and level L5 context analysis are performed to obtain the internal syntax of the source language text. Next, the target language is generated after the internal syntax of the source language text is converted to the internal syntax of the target language text at the same level.

The aforementioned analysis is explained below.

* Dictionary referencing and morpheme analysis

    The dictionaries stored in the memory 6 shown in Fig. 1 are referenced to break the input sentence into discrete morpheme strings (word strings), to obtain part of speech and other grammatical information and word equivalents for individual morphemes, and to analyze tense, person, and number.

* Syntactical analysis

    As will be described later, the structure (syntax analysis tree) of the sentence, including relationships between words, is determined.

* Semantic analysis

    Semantically correct constructions are inferred and constructed from the results of multiple syntactical analyses.

* Context analysis

    The topic of the sentence is inferred, and abbreviations and ambiguities are clarified.

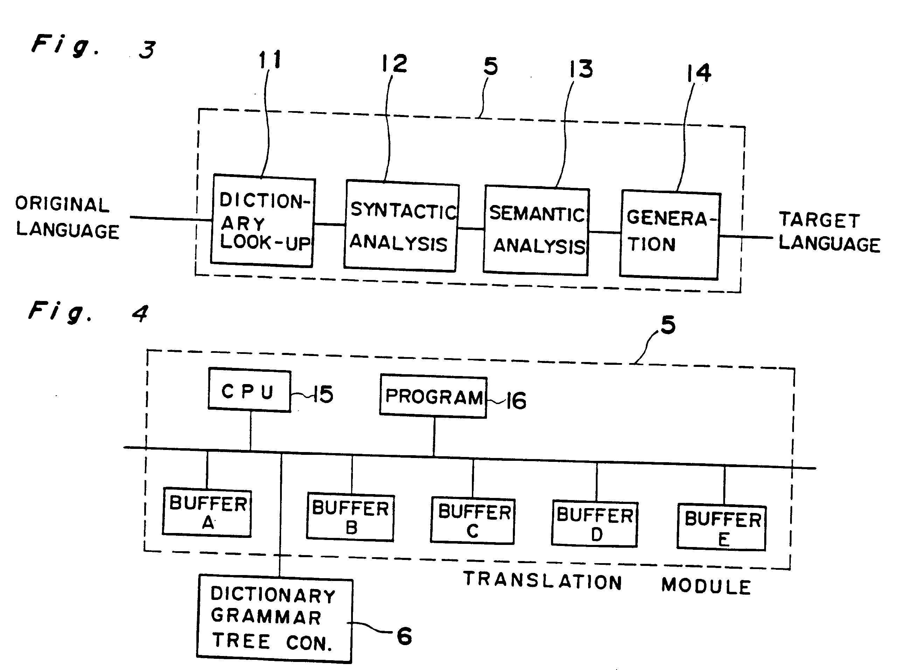

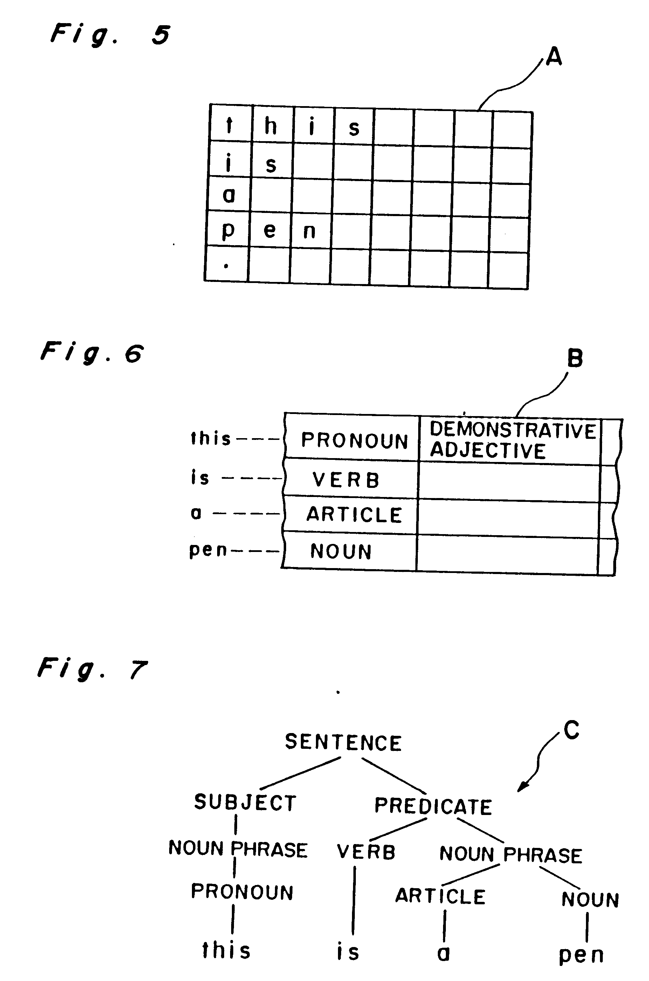

The translation module 5 used in the present invention shall, at the minimum, analyze the input sentence through level L3 syntactical analysis. Specifically, the translation module 5 used in the preferred embodiment shall be thought of as a translation module consisting of such component parts as shown in Fig. 3.

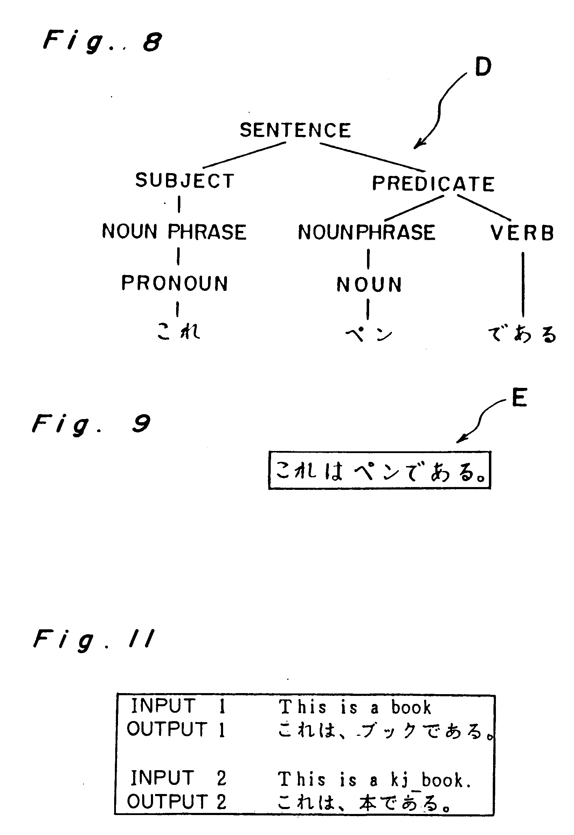

Referring to Fig. 4, a block diagram of the translation module 5 is shown. Furthermore, Figs. 5 through 9 show the contents stored in buffers A through E shown in Fig. 4 during the translation of, for example, an English sentence "This is a pen." to a Japanese counterpart.

The manner of how the English sentence "This is a pen." is translated into a Japanese counterpart will now be described with reference to Fig. 3 through Fig. 9.

First, the English sentence entered in the computer assisted language translating machine is stored in a buffer A in a manner shown in Fig. 5. As controlled by a translation CPU 15 according to a predetermined translation program 16, the information required for each word is obtained by the dictionary referencing morpheme analyzer 11 which makes use of the dictionaries stored in the memory 6 according to the original text stored in the buffer A, and this information is then stored in the buffer B. For example, the part of speech information, which is a part of the aforementioned required information, is stored as shown in Fig. 6. In the example shown, "this" has multiple parts of speech, a single meaning is inferred by the syntax analyzer 12 shown in Fig. 3.

Syntax analyzer 12 determines the syntax analysis tree, shown in Fig. 7, which shows the relationship between individual words as defined by the dictionaries and grammatical rules stored in the memory 6, and this syntax analysis tree is stored in the buffer C. This syntax analysis tree is determined as follows, wherein specifically the grammatical rules in the memory 6 state as shown in Table 1.

## Table 1

Sentence → subject, predicate

Subject → noun phrase

Predicate → verb, noun phrase

Noun phrase → pronoun

Noun phrase → article, noun

For example, the first rule states that "a sentence consists of a subject and predicate." In the following description, the syntax analysis tree is determined according to these rules.

The converter 13 shown in Fig. 3 converts the structure of the syntax analysis tree (see Fig. 7) for the source language (English) sentence to the structure of the target language (Japanese) sentence as shown in Fig. 8 using the tree structure conversion rules stored in the memory 6 in the same way as the original tree was constructed by the aforementioned syntax analyzer. The result is then stored in the buffer D of Fig. 4. A sentence generator 14 shown in Fig. 3 applies the Japanese postpositional article "WA" and auxiliary verbs appropriate to the obtained Japanese words "KORE PEN DE ARU," (Possibly reading "This, a pen." in English) and outputs the result as shown in Fig. 9 for the subsequent storage in the buffer E of Fig. 4. This Japanese sentence "KORE WA PEN DE ARU" (reading "This is a pen." in English) is outputted from the translation module 5 and stored in the main memory 2 and, at the same time, displayed on the CRT 3.

On that occasion, the dictionary referencing process to which the present invention pertains is carried out in the dictionary referencing morpheme analyzer 11 of Fig. 3 in a manner which will now be described. The dictionary referencing process is such that a dictionary specifying code specifying one of the storage dictionaries which the user desires to use during the computer assisted language translation is affixed to a particular one of the words forming the source language text. With the dictionary specifying code affixed to the particular word, the system checks the word affixed with the dictionary specifying code against the storage dictionaries to select preferentially one of the storage dictionaries that is represented by the dictionary specifying code.

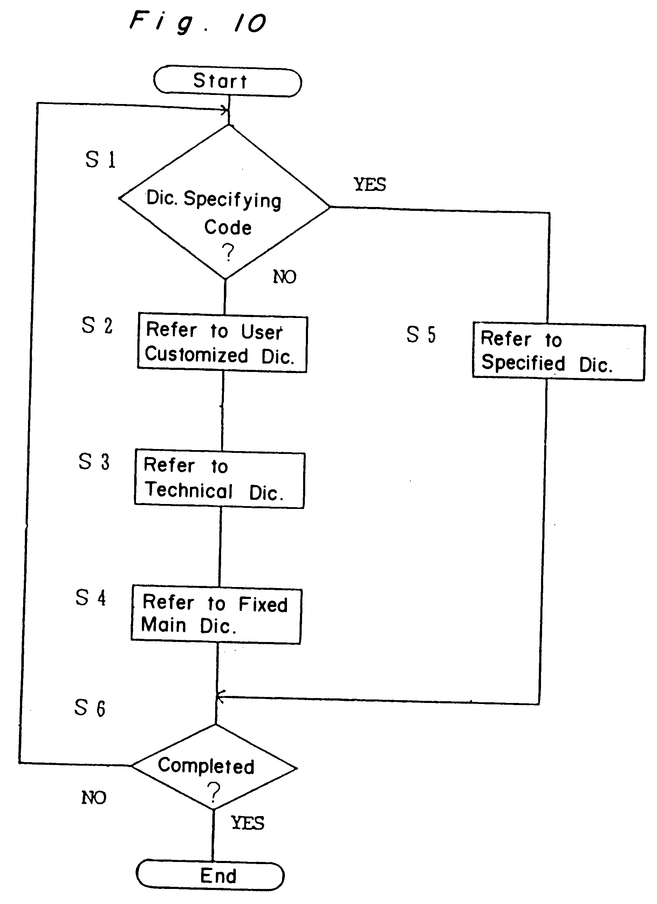

Fig. 10 illustrates the flowchart for the dictionary referencing process, reference to which will now be made for the detailed discussion thereof.

At step S1, a decision is made to determine if the dictionary specifying code following a source language word is contained in the target language text inputted in the computer assisted language translating machine. Where the dictionary specifying code is not affixed to the word, the program flow proceeds to step S2, but where it is affixed to the word, the program flow proceeds to step S5 at which the system refers to one of the dictionaries specified by the dictionary specifying code affixed to the particular word.

At step S2 the system refers to the user customized dictionary, followed by step S3 at which the system refers to the technical dictionary and followed by step S4 at which the system refers to the fixed main dictionary.

Thereafter, at step S6 a decision is made to determine if the dictionary referencing has been completed. Should the result of decision at step S6 indicate "No", the program flow returns to step S1, but should it indicate "Yes", the program flow terminates.

Fig. 11 is an example of the English text inputted to the computer assisted language translating machine embodying the present invention and the Japanese counterpart outputted from this translating machine. In this example, it is assumed that information signifying that the English word "book" , when translated into a Japanese counterpart, should read "BUKKU" is registered in the user customized dictionary, whereas information signifying that the English word "book", when translated into a Japanese counterpart, should read "HON" is registered in the fixed main dictionary. Under these circumstances, when the English sentence "This is a book." as shown in INPUT 1 in Fig. 11 is entered into the translating machine embodying the present invention in the form as worded, the system automatically translates it into a Japanese counterpart sentence "KORE WA BUKKU DE ARU." (expressed in the Japanese language) with the user customized dictionary having been preferentially referred to as shown in OUTPUT 1 in Fig. 11, because no dictionary specifying code

EP 0 357 344 B1

is affixed to any one of the words comprising the sentence.

On the other hand, when the English sentence "This is a kj_book." as shown in INPUT 2 in Fig. 11, wherein "kj_" represents a dictionary specifying code calling for the fixed main dictionary, is entered into the translating machine embodying the present invention in the form as worded, the system automatically translates it into another Japanese counterpart sentence "KORE WA HON DE ARU." (expressed in the Japanese language) with the fixed main dictionary having been preferentially referred to as shown in OUTPUT 2 in Fig. 11.

As hereinbefore described, according to the present invention, the dictionary specifying code is affixed to at least one of the source language words which is to be translated using particular information registered in a particular one of the dictionaries before the source language sentence composed of such words is inputted to the translating machine. With the dictionary specifying code so affixed, the morpheme analyzer 11 when performing the dictionary referencing makes a preferential access to and retrieves information from such particular one of the dictionaries to provide the information necessary that is utilized during the language translation performed by the translating machine. Accordingly, it is clear that, with the computer assisted language translating machine according to the present invention, it is possible to provide a translated output as quickly and accurately as possible.

Although the present invention has been fully described in connection with the preferred embodiment thereof with reference to the accompanying drawings, it is to be noted that various changes and modifications are apparent to those skilled in the art. For example, although in describing the preferred embodiment of the present invention, reference has been made to the example wherein the English sentence is translated into Japanese, the concept of the present invention is equally applicable to a translation of Japanese, or any other source language, into English or any other target language linguistically different from the source language.

## Claims

1. A computer assisted language translating machine having dictionary means (6) for storing a plurality of dictionaries associating words of a source language and words of a target language, means (4) for inputting a sentence comprising words in the source language and additional information concerning at least one word of the source language and means (5) for producing a corresponding sentence in the target language with reference to the dictionary means, characterised in that said additional information is a dictionary specifying code associated with a said source language word to refer for the translation of that source language word to the one of said dictionaries specified by said code, said dictionaries providing different translations of said source language word, said translations having equivalent meanings in the target language and being selectable according to predefined criteria.

2. A translating machine according to claim 1, including dictionary priority means operable for a source language word having no such associated dictionary specifying code to refer that word to one or more of the dictionaries in a predetermined order of priority.

3. A translating machine according to claim 1, comprising:

a morpheme analyzer (11) for separating the input source language sentence into morphemes with the use of said dictionaries (6);

a syntax analyzer (12) for analyzing the syntax of a string of the morphemes, which have been separated by the morpheme analyzer, with the use of a dictionary and grammatical rules (16);

a converter (13) for converting a syntactic structure of the input sentence, analyzed by the syntax analyzer, into a syntactic structure of the target language;

a sentence generator (14) for generating a translated sentence according to the syntactic structure of the target language converted by the converter;

a code input means for inputting a dictionary specifying code to at least one of the source language sentence words which requires the use of a particular one of the dictionaries (6), utilized by the morpheme analyzer for dictionary referencing, when being translated into a target language counterpart, said dictionary specifying code being used to specify such particular one of the dictionaries;

a discriminating means for determining whether or not the dictionary specifying code has been affixed by the code input means to such one of the words; and

a dictionary referencing means operable, when the discriminating means determines that the dictionary specifying code has been affixed to such one of the words, to make reference to such particular one of the dictionaries and also operable, when the discriminating means determines that the dictionary specifying code has not been affixed to such one of the words, to make reference to all of the dictionaries

6

according to a predetermined referencing sequence.

## Patentansprüche

1. Computerunterstütztes Sprachübersetzungsgerät mit einer Wörterbucheinrichtung (6) zum Abspeichern mehrerer Wörterbücher, die Wörter in einer Quellensprache und Wörter in einer Zielsprache einander zuordnen; einer Einrichtung (4) zum Eingeben eines aus Wörtern in der Quellensprache bestehenden Satzes und von Zusatzinformation betreffend mindestens ein Wort in der Quellensprache, und mit einer Einrichtung (5) zum Erstellen eines entsprechenden Satzes in der Zielsprache unter Bezugnahme auf die Wörterbucheinrichtung, **dadurch gekennzeichnet, daß** die Zusatzinformation ein dem Wort in der Quellensprache zugeordneter Wörterbuchspezifiziercode ist, um bei der Übersetzung dieses Worts in der Quellensprache auf das durch diesen Code spezifizierte Wörterbuch zuzugreifen, wobei die Wörterbücher zu verschiedenen Übersetzungen des Worts in der Quellensprache führen, die in der Zielsprache entsprechende Bedeutungen haben und abhängig von vorgegebenen Kriterien auswählbar sind.

2. Übersetzungsgerät nach Anspruch 1 mit einer Wörterbuch-Prioritätseinstelleinrichtung, die für ein Wort in der Quellensprache ohne solchen zugeordneten Wörterbuchspezifiziercode betrieben wird, um dieses Wort mit vorgegebener Prioritätsreihenfolge mit einem oder mehreren der Wörterbücher in Beziehung zu setzen.

3. Übersetzungsgerät nach Anspruch 1, mit:
   - einem Morphemanalysator (11) zum Abtrennen des eingegebenen Satzes in der Quellensprache in Morpheme unter Verwendung der Wörterbücher (6);
   - einem Syntaxanalysator (12) zum Analysieren der Syntax einer Kette aus den Morphemen, die durch den Morphemanalysator abgetrennt wurden, und zwar unter Verwendung eines Wörterbuchs und von Grammatikregeln (16);
   - einem Umsetzer (13) zum Umsetzen der Syntaxstruktur des Eingabesatzes, wie vom Syntaxanalysator analysiert, in eine Syntaxstruktur in der Zielsprache;
   - einem Satzgenerator (14) zum Erzeugen eines übersetzten Satzes abhängig von der Syntaxstruktur in der Zielsprache, wie vom Umsetzer umgesetzt;
   - einer Codeeingabeeinrichtung zum Eingeben eines Wörterbuchspezifiziercodes für mindestens eines der Satzwörter in der Quellensprache, das die Verwendung eines speziellen der Wörterbücher (6) erfordert, wie vom Morphemanalysator für die Wörterbuchbezugnahme verwendet, wenn eine Übersetzung in die Entsprechung in der Zielsprache erfolgt, wobei der Wörterbuchspezifiziercode dazu verwendet wird, das spezielle der Wörterbücher zu spezifizieren;
   - einer Erkennungseinrichtung zum Ermitteln, ob ein Wörterbuchspezifiziercode durch die Codeeingabeeinrichtung zu einem der Wörter hinzugefügt wurde; und
   - einer Wörterbuchbezugnahme-Einrichtung, die so arbeitet, daß sie, wenn die Erkennungseinrichtung ermittelt, daß einem der Wörter ein Wörterbuchspezifiziercode zugefügt wurde, auf das spezielle der Wörterbücher Bezug nimmt, und sie auch so arbeitet, daß sie dann, wenn die Erkennungseinrichtung ermittelt, daß keinem der Wörter ein Wörterbuchspezifiziercode zugefügt wurde, auf alle Wörterbücher abhängig von einer vorgegebenen Bezugnahmefolge Bezug nimmt.

## Revendications

1. Machine de traduction de langues, assistée par ordinateur, comportant des moyens formant dictionnaires (6) pour mémoriser plusieurs dictionnaires associant des mots d'une langue de départ et des mots d'une langue-cible, des moyens (4) pour introduire une phrase comprenant des mots dans la langue de départ et une information additionnelle concernant au moins un mot de la langue de départ, et des moyens (5) pour produire une phrase correspondante dans la langue-cible, en consultant les moyens formant dictionnaires, caractérisée en ce que ladite information additionnelle est un code de désignation d'un dictionnaire, associé à l'un desdits mots de la langue de départ, pour la consultation, en vue de la traduction de ce mot de la langue de départ, de celui desdits dictionnaires, qui est désigné par ledit code, lesdits dictionnaires fournissant différentes traductions dudit mot de la langue de départ, lesdites traductions ayant des sens équivalents dans la langue-cible et pouvant être choisies conformément à des critères prédéfinis.

2. Machine de traduction selon la revendication 1, comprenant des moyens d'affectation prioritaire de dictionnaires, aptes à intervenir pour un mot de la langue de départ ne comportant pas un tel code associé de désignation de dictionnaire, afin de permettre la consultation, pour ce mot, de l'un ou de plusieurs des dictionnaires, dans un ordre de priorité prédéterminé.

3. Machine de traduction selon la revendication 1, comprenant:

un analyseur de morphèmes (11) apte à scinder en morphèmes la phrase introduite dans la langue de départ, en utilisant lesdits dictionnaires (6);

un analyseur de syntaxe (12) apte à analyser la syntaxe d'une série des morphèmes, qui ont été isolés par l'analyseur de morphèmes, en utilisant un dictionnaire et des règles grammaticales (16);

un convertisseur (13) pour transformer une structure syntaxique de la phrase introduite, analysée par l'analyseur de syntaxe, en une structure syntaxique de la langue-cible;

un générateur de phrases (14) apte à engendrer une phrase traduite, conformément à la structure syntaxique de la langue-cible résultant de la transformation effectuée par le convertisseur;

un moyen d'introduction de code, destiné à introduire un code de désignation d'un dictionnaire en liaison avec l'un au moins des mots de la phrase dans la langue de départ, qui, lorsqu'il est traduit en son homologue de la langue-cible, nécessite l'utilisation d'un dictionnaire spécifique parmi les dictionnaires (6), employé par l'analyseur de morphèmes dans sa consultation des dictionnaires, ledit code de désignation de dictionnaire étant utilisé pour désigner ce dictionnaire spécifique;

un moyen discriminateur pour déterminer si le code de désignation de dictionnaire a été ou non apposé, par le moyen d'introduction de code, à l'un desdits mots de la phrase dans la langue de départ; et

un moyen de consultation de dictionnaires qui peut intervenir, quand le moyen discriminateur détermine que le code de désignation de dictionnaire a été apposé à un tel mot, pour faire référence à un tel dictionnaire spécifique, et qui peut également intervenir, quand le moyen discriminateur détermine que le code de désignation de dictionnaire n'a pas été apposé à un tel mot, pour faire référence à l'ensemble des dictionnaires, selon une séquence de consultation prédéterminée.

## *Fig. 1*

CPU

MAIN MEMO.

CRT

KEYBOARD

TRANS MODULE 5

DIC. LOOK-UP GRAMMAR CONVERSION 6

1  2  3  4

## *Fig. 2*

ORIGINAL LANGUAGE

L1 DICTIONARY LOOK-UP

L2 MORPHO. ANALYSIS

L3 SYNTACTIC ANALYSIS

L4 SEMANTIC ANALYSIS

L5 CONTEXT ANALYSIS

L6 INTERMEDIATE LANGUAGE

TARGET LANGUAGE

L10 MORPHO. GENERATION

L9 SYNTACTIC GENERATION

L8 SEMANTIC GENERATION

L7 CONTEXT GENERATION

## Fig. 3

ORIGINAL LANGUAGE → | DICTION-ARY LOOK-UP (11) | SYNTACTIC ANALYSIS (12) | SEMANTIC ANALYSIS (13) | GENERA-TION (14) | → TARGET LANGUAGE

(5)

## Fig. 4

5

CPU ~15    PROGRAM ~16

BUFFER A    BUFFER B    BUFFER C    BUFFER D    BUFFER E

TRANSLATION   MODULE

DICTIONARY GRAMMAR TREE CON. ~6

## Fig. 5

A

| t | h | i | s |  |  |  |  |
| i | s |  |  |  |  |  |  |
| a |  |  |  |  |  |  |  |
| p | e | n |  |  |  |  |  |
| . |  |  |  |  |  |  |  |

## Fig. 6

B

| | | |
|---|---|---|
| this ---{ | PRONOUN | DEMONSTRATIVE ADJECTIVE |
| is ----{ | VERB | |
| a ----{ | ARTICLE | |
| pen---{ | NOUN | |

## Fig. 7

C

```
                    SENTENCE
              /                  \
        SUBJECT               PREDICATE
           |                 /         \
     NOUN PHRASE          VERB      NOUN PHRASE
           |               |        /         \
       PRONOUN             |    ARTICLE      NOUN
           |               |        |          |
         this            i s        a         pen
```

*Fig. 8*

SENTENCE

SUBJECT       PREDICATE

NOUN PHRASE    NOUNPHRASE    VERB

PRONOUN      NOUN

これ      ペン      である

*Fig. 9*

これは ペンである。

*Fig. 11*

| INPUT 1 | This is a book |
|---|---|
| OUTPUT 1 | これは、ブックである。 |
| | |
| INPUT 2 | This is a kj_book. |
| OUTPUT 2 | これは、本である。 |

# Fig. 10